(19) Europäisches Patentamt
European Patent Office
Office européen des brevets

(11) **EP 3 908 860 B1**

(12) **EUROPEAN PATENT SPECIFICATION**

(45) Date of publication and mention
of the grant of the patent:
**27.12.2023 Bulletin 2023/52**

(21) Application number: **19842405.3**

(22) Date of filing: **23.12.2019**

(51) International Patent Classification (IPC):
**G01V 1/30** (2006.01)     **G01V 1/34** (2006.01)

(52) Cooperative Patent Classification (CPC):
**G01V 1/306; G01V 1/345**

(86) International application number:
**PCT/IB2019/061257**

(87) International publication number:
**WO 2020/144525 (16.07.2020 Gazette 2020/29)**

(54) **SYSTEM AND METHOD FOR DERIVING HIGH-RESOLUTION SUBSURFACE RESERVOIR PARAMETERS**

SYSTEM UND VERFAHREN ZUR HERLEITUNG HOCHAUFLÖSENDER UNTERGRUNDSPEICHERPARAMETER

SYSTÈME ET PROCÉDÉ DE DÉRIVATION DE PARAMÈTRES DE RÉSERVOIR SOUTERRAIN À HAUTE RÉSOLUTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.01.2019 US 201962790281 P**

(43) Date of publication of application:
**17.11.2021 Bulletin 2021/46**

(73) Proprietors:
• **Chevron U.S.A. Inc.**
  **San Ramon, California 94583-0806 (US)**
• **THE REGENTS OF THE UNIVERSITY OF CALIFORNIA**
  **Oakland, CA 94607-5200 (US)**

(72) Inventors:
• **CHEN, Jinsong**
  **Oakland, California 94607-5200 (US)**
• **HOVERSTEN, Gary Michael**
  **San Ramon, California 94583 (US)**

(74) Representative: **Haseltine Lake Kempner LLP**
**One Portwall Square**
**Portwall Lane**
**Bristol BS1 6BH (GB)**

(56) References cited:
**US-A1- 2008 162 100**

• **Denny Sulistiono ET AL: "SPE-177963-MS Integrating Seismic and Well Data into Highly Detailed Reservoir Model through AVA Geostatistical Inversion", , 1 November 2015 (2015-11-01), pages 1-15, XP055686000, Retrieved from the Internet: URL:https://www.onepetro.org/download/conf erence-paper/SPE-177963-MS?id=conference-p aper/SPE-177963-MS [retrieved on 2020-04-15]**
• **MATTHEW WALKER ET AL: "Varying prior information in Bayesian inversion", INVERSE PROBLEMS, vol. 30, no. 6, 19 May 2014 (2014-05-19), page 065002, XP055685081, GB ISSN: 0266-5611, DOI: 10.1088/0266-5611/30/6/065002**
• **ISAAC SACRAMENTO ET AL: "Combined Convolutional Neural Network for High Frequency Restoration in Acoustic Impedance Images", 2018 INTERNATIONAL JOINT CONFERENCE ON NEURAL NETWORKS (IJCNN), 1 July 2018 (2018-07-01), pages 1-8, XP055685336, DOI: 10.1109/IJCNN.2018.8489672 ISBN: 978-1-5090-6014-6**

**Description**

TECHNICAL FIELD

The disclosed embodiments relate generally to techniques for determining reservoir properties in subsurface reservoirs and, in particular, to a method of deriving high-resolution reservoir parameters for a subsurface reservoir that honors both seismic and flow-related data using a combination of stochastic inversion and deep learning.

BACKGROUND

Seismic exploration involves surveying subterranean geological media for hydrocarbon deposits. A survey typically involves deploying seismic sources and seismic sensors at predetermined locations. The sources generate seismic waves, which propagate into the geological medium creating pressure changes and vibrations. Variations in physical properties of the geological medium give rise to changes in certain properties of the seismic waves, such as their direction of propagation and other properties.

Portions of the seismic waves reach the seismic sensors. Some seismic sensors are sensitive to pressure changes (e.g., hydrophones), others to particle motion (e.g., geophones), and industrial surveys may deploy one type of sensor or both. In response to the detected seismic waves, the sensors generate corresponding electrical signals, known as traces, and record them in storage media as seismic data. Seismic data will include a plurality of "shots" (individual instances of the seismic source being activated), each of which are associated with a plurality of traces recorded at the plurality of sensors.

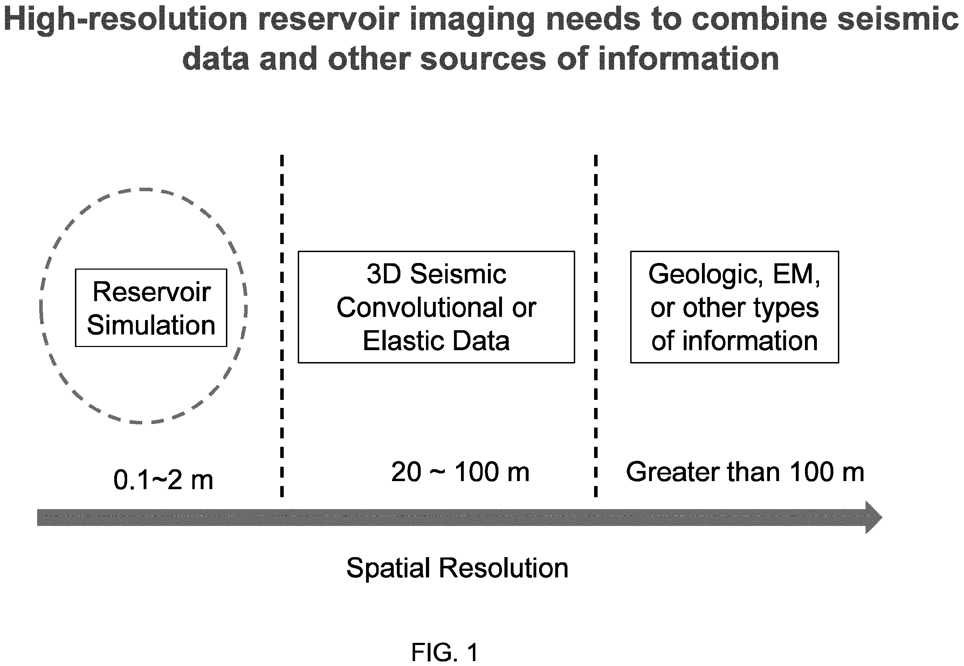

Seismic data, particularly the amplitude-versus-angle or -offset (AVA or AVO) data, may be inverted to estimate reservoir properties. The typical workflow transforms course-scale geophysical parameters, $\theta_c$ (acoustic velocity $V_p$, shear velocity $V_s$, density $\rho$, and porosity $\phi$), derived from some form of AVA inversion through a rock physics model derived from log data to a fine-scale permeability model, $k_f$. Figure 1 illustrates the different resolutions needed for or available from different types of subsurface data. Sulistiono et al. (2015) describes a commonly used work flow using current geostatistical inversion and statistical rock physics to produce an initial $k_f$ model that then requires history matching to production data (e.g., flow-related data measured during production of the hydrocarbons from wells) to produce a final model. Once history matching has been done the new $k_f$ model, when transformed back to $\theta_c$, rarely fits the seismic data. In most cases the loop is not closed by cycling between AVA and production models until a common model is found that fits both the seismic and production data. Even if the loop is closed it requires considerable time and computing resources.

New developments in machine learning (ML) technology have provided methods that can link the course-scale $\theta_c$ to fine-scale $k_f$. However, unlike facial recognition applications where ML has performed well, ML applications in the earth sciences are limited by a relative lack of training data (a company may have 10's of seismic data sets compared to millions of photographs of faces in a facial recognition data base). The lack of real data examples can be ameliorated using the method of transfer-learning (Goodfellow, et al. 2016) where both models and synthetic data are used to produce synthetic data for ML training.

Reference may be made to Denny Sulistiono ET AL: "SPE-177963-MS Integrating Seismic and Well Data into Highly Detailed Reservoir Model through AVA Geostatistical Inversion", 1 November 2015 (2015-11-01), pages 1-15. Reference may be made to Matthew Walker ET AL: "Varying prior information in Bayesian inversion", INVERSE PROBLEMS, vol. 30, no. 6, 19 May 2014 (2014-05-19), page 065002. Reference may be made to Isaac Sacramento ET AL: "Combined Convolutional Neural Network for High Frequency Restoration in Acoustic Impedance Images", 2018 International Joint Conference on Neural Networks (IJCNN), 1 July 2018 (2018-07-01), pages 1-8. Reference may be made to US 2008/162100 A1 which relates to a method, system and program storage device for history matching and forecasting of hydrocarbon-bearing reservoirs utilizing proxies for likelihood functions.

There exists a need for determining high-resolution reservoir parameters that honor both the seismic data and flow-related data to enable improved hydrocarbon production from hydrocarbon reservoirs.

SUMMARY

According to claim 1, a method for deriving high-resolution reservoir parameters for a subsurface reservoir is disclosed.

The method may also include performing flow simulation for each image in the ensemble of high-resolution reservoir parameters to generate an ensemble of flow simulation results. The method may also include receiving flow-related data and comparing the flow-related data to the ensemble of flow simulation results. The method may also include using some criteria to select those models from the ensemble of flow simulation results that fit the flow-related data within a set variance.

According to claim 7, a non-transitory computer readable storage medium storing one or more programs is provided. According to claim 6, one or more programs comprise instructions, which when executed by a computer system with one or more processors and memory, cause the computer system to perform any of the methods provided herein.
A computer system according to claim 5 is provided.

BRIEF DESCRIPTION OF THE DRAWINGS

Figure 1 illustrates various spatial resolutions for subsurface data and models;

Figure 2 illustrates a flowchart of a method of high-resolution imaging, in accordance with some embodiments;

Figure 3 illustrates steps for learning conditional probability from simulated data using deep learning, in accordance with some embodiments;

Figure 4 illustrates the training of the conditional generative adversarial network (cGAN);

Figure 5 illustrates intermediate results of a method of high-resolution imaging, in accordance with some embodiments;

Figure 6 illustrates intermediate results of a method of high-resolution imaging, in accordance with some embodiments;

Figure 7 illustrates intermediate results of a method of high-resolution imaging, in accordance with some embodiments;

Figure 8 illustrates 4 realizations of the fine scale permeability field generated in an embodiment;

Figure 9 illustrates intermediate steps and results of a method of high-resolution imaging, in accordance with some embodiments;

Figure 10 illustrates the true fine-scale permeability model (upper panel) and the realization from the ensemble that produces the best fit to the 15 pressure observations;

Figure 11 is a block diagram illustrating a high-resolution imaging system, in accordance with some embodiments.

Like reference numerals refer to corresponding parts throughout the drawings.

DETAILED DESCRIPTION OF EMBODIMENTS

Described below are methods, systems, and computer readable storage media that provide a manner of deriving high-resolution reservoir parameters.
Reference will now be made in detail to various embodiments, examples of which are illustrated in the accompanying drawings. In the following detailed description, numerous specific details are set forth in order to provide a thorough understanding of the present disclosure and the embodiments described herein. However, embodiments described herein may be practiced without these specific details. In other instances, well-known methods, procedures, components, and mechanical apparatus have not been described in detail so as not to unnecessarily obscure aspects of the embodiments.
The present invention includes embodiments of a method and system for deriving high-resolution reservoir parameters for a subsurface reservoir. Borrowing from the transfer-learning approach, the present invention uses a combination of stochastic Markov Chain Monte Carlo (MCMC)-based AVA inversion (Hoversten et al. 2017) with conditional generative adversarial networks (cGAN). The starting point is a Bayesian model for full joint AVA and production data inversion. A simplified form of the complete model is used to develop a workflow that generates an ensemble of $\theta_c$ and $k_f$ models that fit both the AVA data and the production data.
The Bayesian model for the joint posterior distribution of $\theta_c$ and $k_f$, $f(\theta_c, k_f | S, D)$, given AVA data (S) and production data (D) is given by

$$f(\theta_c, k_f | S, D) \propto f(S|\theta_c) \times f(D|k_f) \times f(k_f|\theta_c) \times f(\theta_c) \qquad (1)$$

where $f(S|\theta_c)$ is the likelihood of S given $\theta_c$ and $f(D|k_f)$ is the likelihood of D given $k_f$. The term that integrates cGAN into the stochastic inversion is $f(k_f|(\theta_c))$, the conditional probability of $k_f$ given $\theta_c$. The final term in (1) is the prior information on the probability of $\theta_c$. The standalone stochastic AVA inversion (Hoversten et al. 2017) would remove $f(D|k_f)$ and $f(k_f|\theta_c)$ from the right-hand side leaving only the posterior $f(\theta_c|S)$.

In an embodiment, cGAN is used to generate $f(k_f|\theta_c)$ because it is currently under investigation by many researchers, leading to open source code that could be quickly tested and modified. However, other embodiments could use any number of different ML techniques to generate $f(k_f|\theta_c)$. In one embodiment, the original Torch code developed by Isola et al. (2017) was modified for use. Two options for the generator were considered: 1) Encoder-decoder networks (Hinton and Salakhutdinov, 2006; Badrinarayanan et al., 2016), and 2) U-net (Ronneberger et al., 2015). Further, two options for the discrimination were considered, 1) Markovian discriminator (PatchGAN) (Li and Ward, 2016), and 2) Conventional neural networks with variable layers. The choice of options is part of the model selection process. For the results shown here we chose U-net as the generator and conventional neural networks as the discriminator. The tuning parameter values were taken from Isola et al. (2017).

Equation (1) represents a full joint inversion of AVA and production data. For the AVA inversion, the forward problem required to evaluate $f(S|\theta_c)$ at each element of the Markov chain is a convolution that is fast, however the forward problem required to evaluate $f(D|k_f)$ is a flow simulation that is numerically intensive. While this is not impossible, and the end-product may justify the cost, we are investigating ways to speed the evaluation of $f(D|k_f)$, Approximations such as stream line simulation or emulation and even ML can be used. In one embodiment, we make the approximation that $f(kf|\theta_c)$ is smaller than $f(S|\theta_c)$, allowing $f(k_f|\theta_c)$ to be dropped and thus decoupling $f(D|k_f)$ and $f(S|\theta_c)$. This results in a workflow that eliminates evaluation of $f(k_f|\theta_c)$ during the MCMC sampling and moves it to a post-inversion step, thus reducing the number of simulations required.

The process is summarized in five steps:

1) Numerical models based on flow simulations or computational stratigraphy and rock-physics provide synthetic AVA data from $k_f$ models.
2) Stochastic AVA inversion of the synthetic data from 1) provides an ensemble of course-scale $\theta_c$ (i.e. $V_p$, $V_s$, $\rho$, $\phi$, permeability k) models.
3) cGAN is trained on the synthetic $\theta_c$ and $k_f$ to produce $f(k_f|\theta_c)$.
4) Field data is inverted and the conditional probability $f(k_f|\theta_c)$ is applied to the ensemble of stochastic $\theta_c$ models producing an ensemble of $k_f$ models.
5) All or a subset of the ensemble of $k_f$ models have production simulated, and the models that match the field production data within the estimated variance are selected.

Steps 1-3 represent the transfer learning using models to generating training data and training the cGAN network. Step 4 provides an ensemble of $k_f$ models that can be used as is or as input to step 5. Step 5 refines $k_f$ to those that fit available production data. In the best-case scenario $k_f$ models from step 5 may be used directly for production predictions; however, it is likely that these models will still require human interaction before they are field-ready. Nevertheless, our goal is to significantly accelerate the workflow and provide more robust $k_f$ models compared to starting directly from rock-physics transformation of the course-scale $\theta_c$.

An one embodiment bridges the gap between the resolution of seismic AVA inversion models and the fine-scale models required to match production data by combining Bayesian models with deep learning. Tests show that application of cGAN conditional probabilities applied to AVA-generated course-scale models significantly improves production history matches without additional flow simulations. Further, flow simulation of the ensemble of fine-scale models generated by cGAN conditional probabilities applied to AVA-generated course-scale parameters followed by selection of those models that best fit production data provides additional significant improvement. Since seismic inversion, training of the deep neural networks, and forward flow simulation are carried out separately, the workflow is scalable and can be applied to large-scale problems.

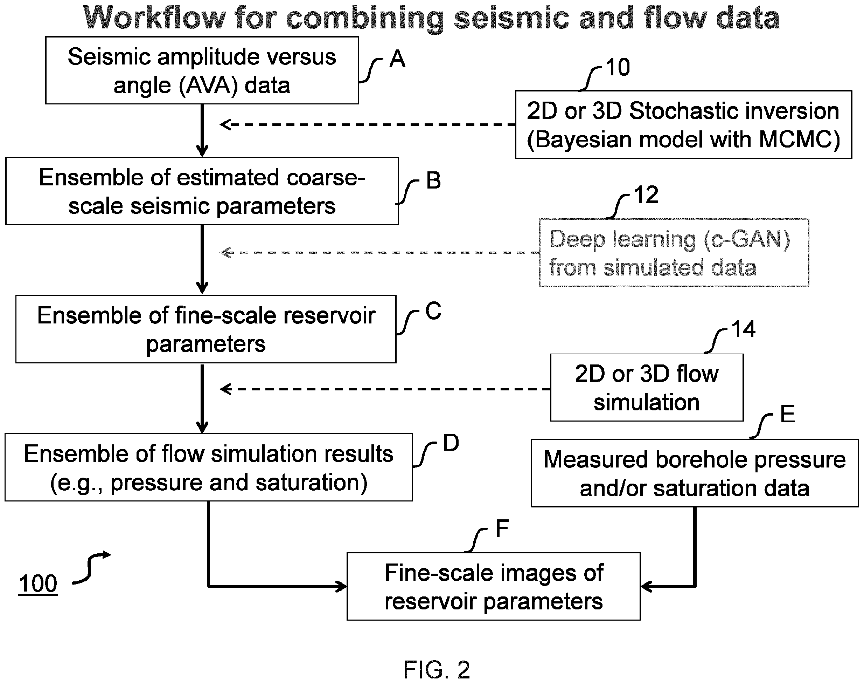

Figure 2 illustrates a flowchart of a method 100 for high-resolution imaging of a subsurface volume of interest. A seismic AVA dataset A is input to the 2D or 3D stochastic inversion 10 which generates a Bayesian model using MCMC. This inversion results in an ensemble of estimated coarse-scale (e.g., spatial resolution of 20 - 1 00 m) seismic parameters B.

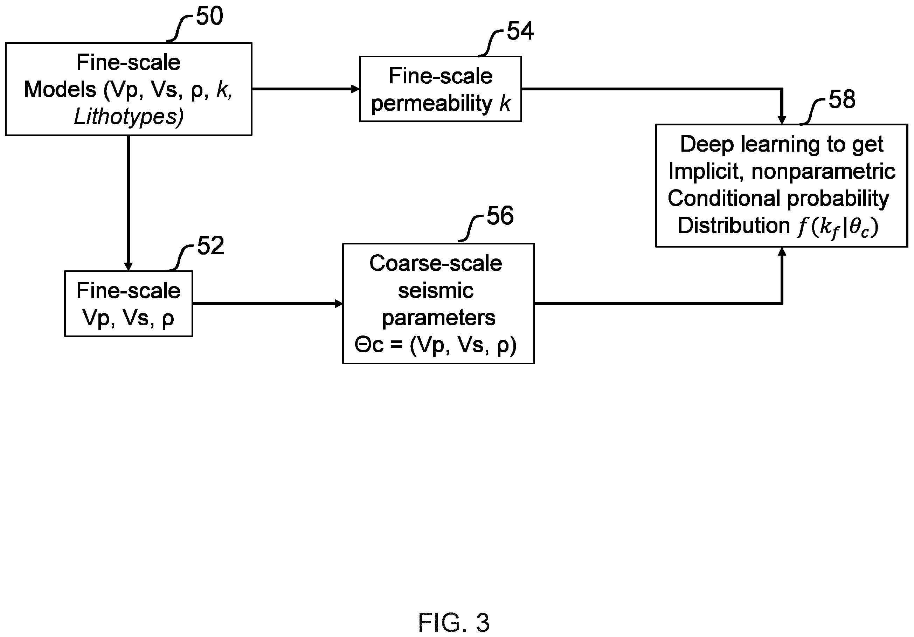

The ensemble of estimated coarse-scale seismic parameters B is input to the deep learning operation 12. The deep learning operation 12 is detailed in Figure 3. In Figure 3, fine-scale models 50 (i.e., lithotypes) with a spatial resolution of less than 10 in are used to generate fine-scale seismic parameters 52 ($V_p$, $V_s$, $\rho$) and fine-scale permeability $k$ 54. The fine-scale seismic parameters 52 can be generated from functional relationships between permeabilities and seismic parameters derived from log data sorted by lithotype. The functional relationships used could be from regression analysis between permeabilities and seismic parameters (i.e. multi-dimensional parametric curve fitting) or from fitting parameters of some explicit rock-properties model (e.g. Dvorkin & Nur 1996). The fine-scale seismic parameters 52 can be converted to coarse-scale seismic parameters θc 56. The fine-scale seismic parameters are used to generate a synthetic seismic data set. This synthetic seismic data set is inverted to produce course-scale seismic parameters. In an embodiment, stochastic AVA inversion may be used, but other inversion approaches could be used. The fine-scale permeability k 54 and the coarse-scale seismic parameters $\theta_C$ 56 are then used by the deep learning 58 (e.g., cGAN) to generate the conditional probability distribution $f(k_f|\theta_C)$.

Referring again to Figure 2, the deep learning operation 12 generates an ensemble of fine-scale reservoir parameters C which may include seismic parameters. The ensemble of fine-scale reservoir parameters C may then be used in 2D or 3D flow simulation 14 to generate an ensemble of flow simulation results D which may include pressure, saturation, and flow rate.

The ensemble of flow simulation results D can be matched to observed production data such as the measured borehole pressure and/or saturation data E. The models from the ensemble that fit the observed production data within observed variance are then selected. This will produce the fine-scale images of reservoir parameters F that are consistent with both the seismic AVA data A and the measured borehole pressure and/or saturation data E (i.e., production data, flow-related data). The process can be stopped after C and the mean or MAP solution from the ensemble used, however better results are obtained if D is performed resulting in the fine-scale images of F which fit both the AVA data and the production data.

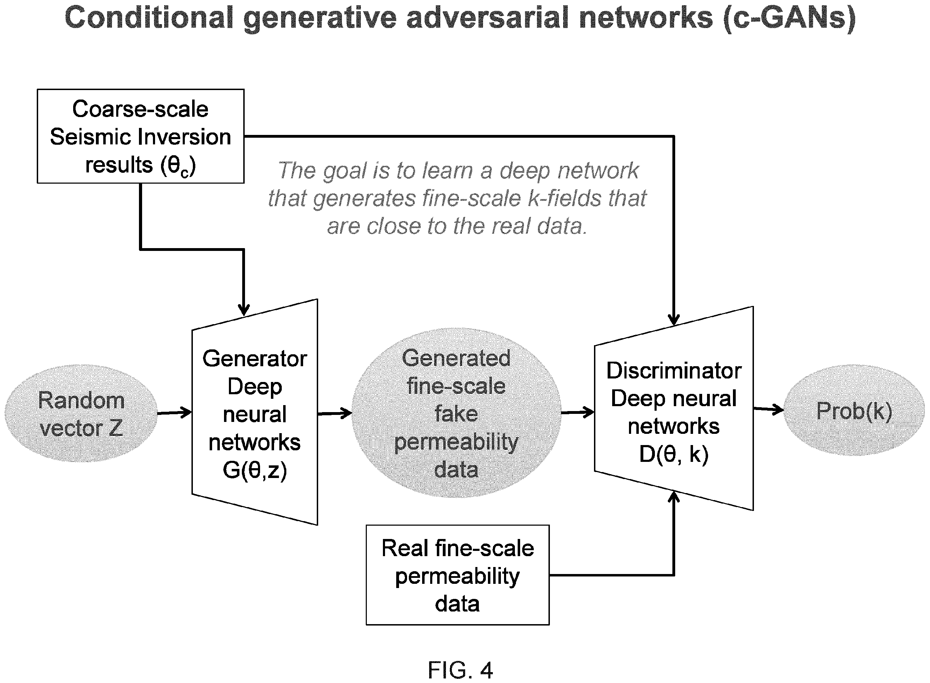

Figure 4 illustrates method 100 operation 12 for the specific embodiment of cGANs for the deep learning. The goal is to learn a deep network that generates fine-scale $k$-fields (permeability) that are close to the real data. A random vector Z 12A and the coarse-scale $\theta_c$ 12B are input to the generator for deep neural networks $G(\theta_c, z)$ 12C which generates fine-scale fake permeability data 12D. The fine-scale fake permeability data 12D and real fine-scale permeability data 12E along with the coarse-scale $\theta_c$ 12B are used by die discriminator for the deep neural networks $D(\theta_c, k)$ 12F to generate the prob(k) 12G. These are then used for the ensemble of fine-scale reservoir parameters.

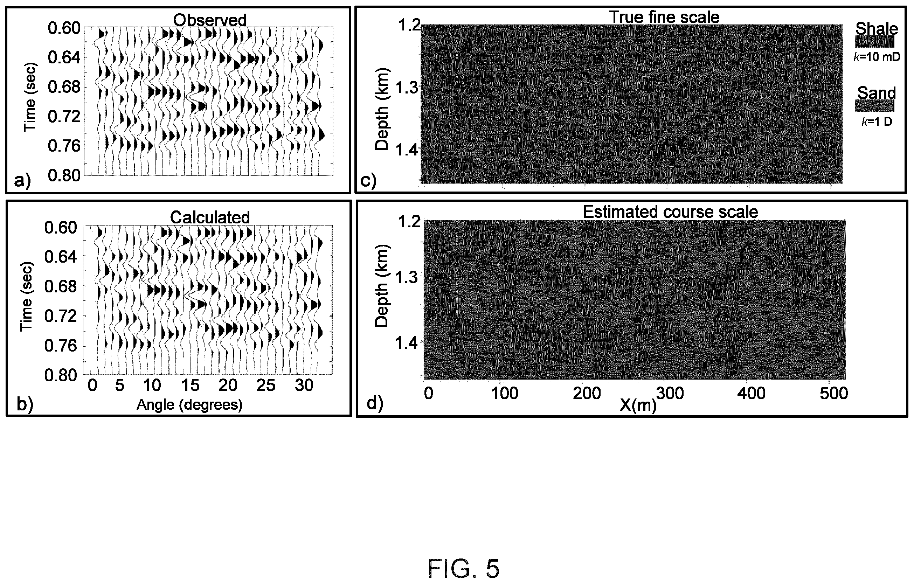

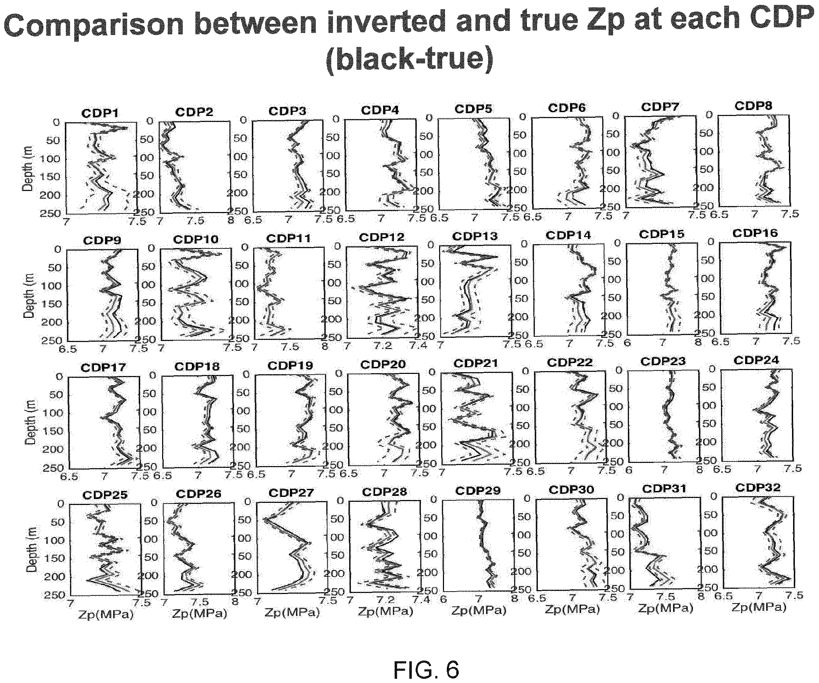

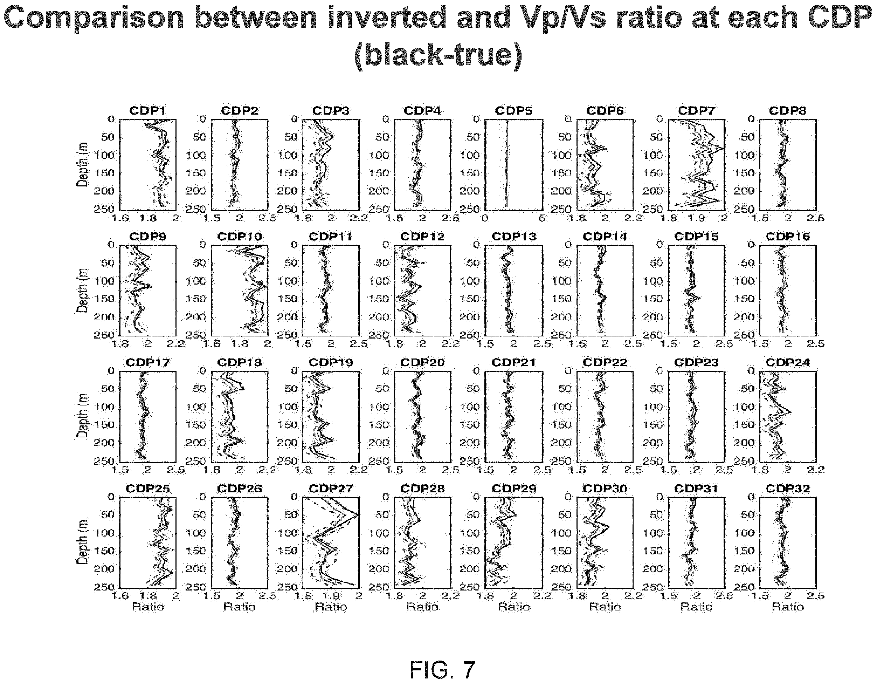

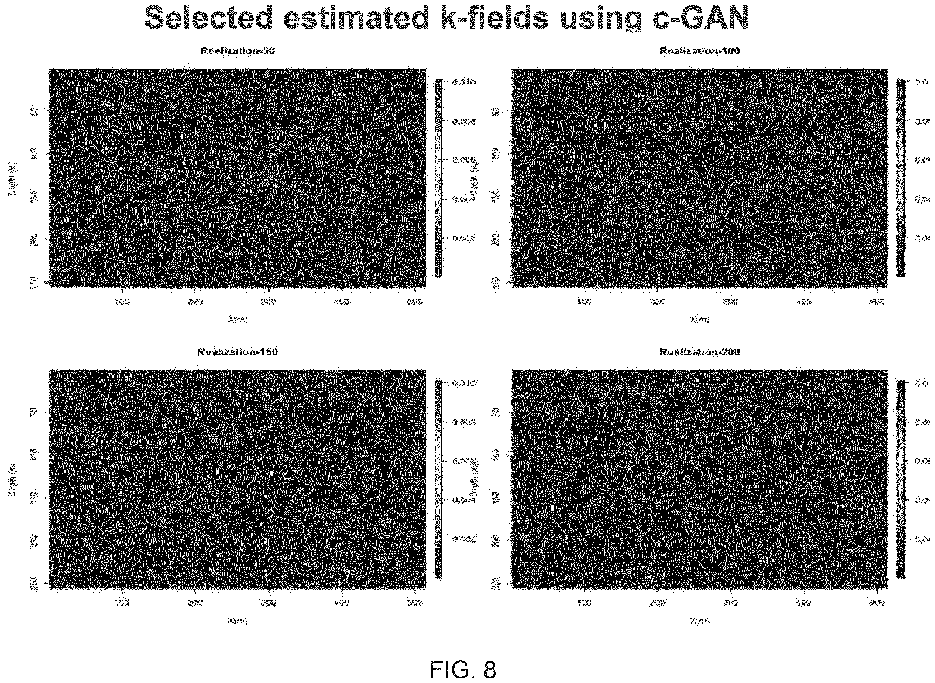

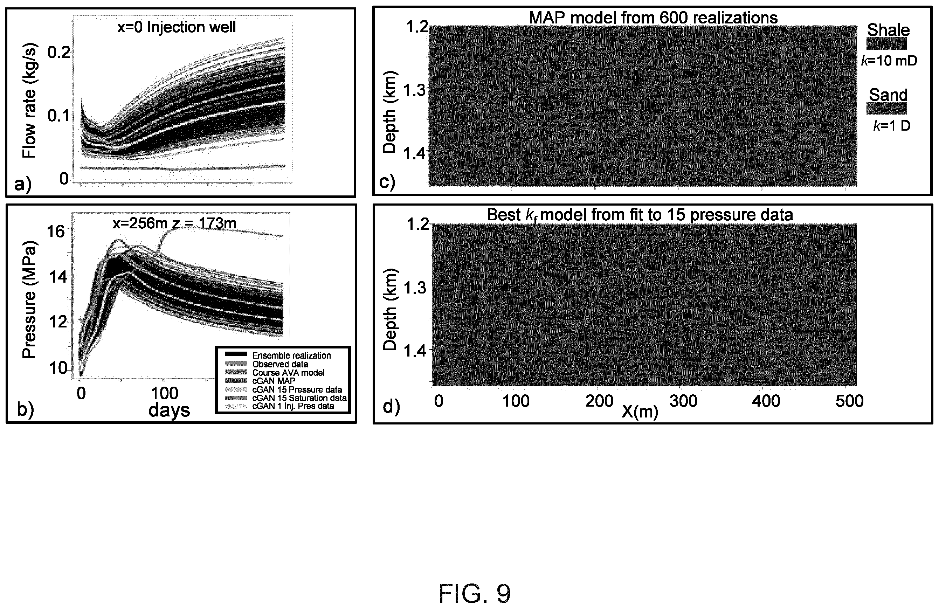

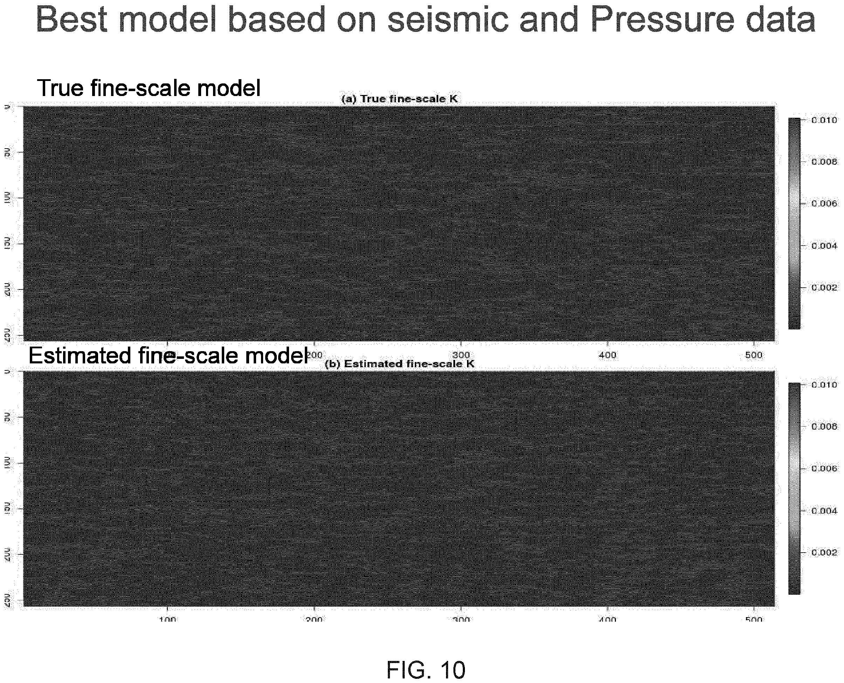

Figures 5 - 10 demonstrate various steps and results of method 100. Figure 5 panel a) illustrates a single angle gather from the true fine-scale model, panel b) the calculated gather from the median $\theta_c$ model from AVA inversion, panel c) the true fine-scale $k_f$ model, and panel d) the $k$ model transformed from the median $\theta_c$ model derived from AVA inversion. Figure 6 shows the true acoustic impedance, Zp (black) from the model with the inverted Zp (grey) with the 95% confidence intervals (dashed). Figure 7 shows the true Vp/Vs (black) from the model with the inverted Vp/Vs (grey) with the 95% confidence intervals (dashed). Figure 8 shows four realizations from the ensemble of fine-scale permeability models (C in Figure 2). Once the ensemble of fine-scale permeability models is generated the mean model or the maximum a posteriori (MAP) model can be generated and used without further flow simulation. However better results can be obtained if the ensemble of models is used in flow simulation to produce an ensemble of flow responses which can be compared to the observed flow data. Figure 9 panel a) shows the flow rate at $CO_2$ injection well, panel b) the pressure at z=173m in middle monitor well, panel c) die MAP solution from the 600 fine-scale realizations without conditioning to the flow rate or pressure data, d) $k_f$ from best fit to 15 monitor-well pressure curves. The course-scale AVA generated permeability produces flow-rate and pressures that do not match the true model well (grey lines in Figures 12 panel a) and 12 panel b). The flow-rate and pressure from the MAP solution, without flow simulations, do a better job but the best match to production data comes from using the pressure and/or the flow-rate data to guide the selection of the realization. Figure 10 shows the permeability models for the true (upper) and estimated from the pressure data (lower).

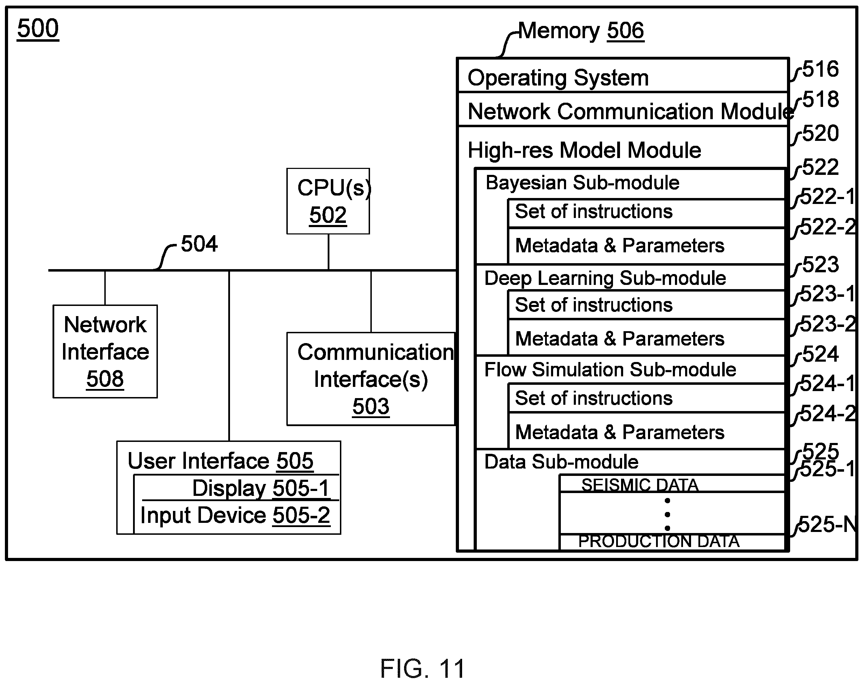

Figure 11 is a block diagram illustrating a high-resolution imaging system 500, in accordance with some embodiments. While certain specific features are illustrated, those skilled in the art will appreciate from the present disclosure that various other features have not been illustrated for the sake of brevity and so as not to obscure more pertinent aspects of the embodiments disclosed herein.

To that end, the high-resolution imaging system 500 includes one or more processing units (CPUs) 502, one or more network interfaces 508 and/or other communications interfaces 503, memory 506, and one or more communication buses 504 for interconnecting these and various other components. The high-resolution imaging system 500 also includes a user interface 505 (e.g., a display 505-1 and an input device 505-2). The communication buses 504 may include circuitry (sometimes called a chipset) that interconnects and controls communications between system components. Memory 506 includes high-speed random-access memory, such as DRAM, SRAM, DDR RAM or other random access solid state memory devices; and may include non-volatile memory, such as one or more magnetic disk storage devices, optical disk storage devices, flash memory devices, or other non-volatile solid state storage devices. Memory 506 may optionally include one or more storage devices remotely located from the CPUs 502. Memory 506, including the non-volatile and volatile memory devices within memory 506, comprises a non-transitory computer readable storage medium and may store seismic data, production data, various products of the methods described herein, and/or geologic information.

In some embodiments, memory 506 or the non-transitory computer readable storage medium of memory 506 stores the following programs, modules and data structures, or a subset thereof including an operating system 516, a network communication module 518, and a high-resolution model module 520.

The operating system 516 includes procedures for handling various basic system services and for performing hardware dependent tasks.

The network communication module 518 facilitates communication with other devices via the communication network interfaces 508 (wired or wireless) and one or more communication networks, such as the Internet, other wide area networks, local area networks, metropolitan area networks, and so on.

In some embodiments, the high-resolution model module 520 executes the operations of the method 100 shown in Figure 2. High-resolution model module 520 may include data sub-module 525, which handles the seismic data 525-1 and other data through production data 525-N. This data is supplied by data sub-module 525 to other sub-modules.

Bayesian sub-module 522 contains a set of instructions 522-1 and accepts metadata and parameters 522-2 that will enable it to execute operation 10 of method 100. The deep learning sub-module 523 contains a set of instructions 523-1 and accepts metadata and parameters 523-2 that will enable it to execute at least operation 12 of method 100. The flow simulation sub-module 524 contains a set of instructions 524-1 and accepts metadata and parameters 524-2 that will enable it to execute operation 14 of method 100. Although specific operations have been identified for the sub-modules discussed herein, this is not meant to be limiting. Each sub-module may be configured to execute operations identified as being a part of other sub-modules, and may contain other instructions, metadata, and parameters that allows it to execute other operations of use in processing seismic data and generate the images. For example, any of the sub-modules may optionally be able to generate a display that would be sent to and shown on the user interface display 505-1. In addition, any of the data or processed data products may be transmitted via the communication interface(s) 503 or the network interface 508 and may be stored in memory 506.

Method 100 is, optionally, governed by instructions that are stored in computer memory or a non-transitory computer readable storage medium (e.g., memory 506 in Figure 11) and are executed by one or more processors (e.g., processors 502) of one or more computer systems. The computer readable storage medium may include a magnetic or optical disk storage device, solid state storage devices such as flash memory, or other non-volatile memory device or devices. The computer readable instructions stored on the computer readable storage medium may include one or more of: source code, assembly language code, object code, or another instruction format that is interpreted by one or more processors. In various embodiments, some operations in each method may be combined and/or the order of some operations may be changed from the order shown in the figures. For ease of explanation, method 100 is described as being performed by a computer system, although in some embodiments, various operations of method 100 are distributed across separate computer systems.

While particular embodiments are described above, it will be understood it is not intended to limit the invention to these particular embodiments. On the contrary, the invention includes alternatives, modifications and equivalents that are within the scope of the appended claims. Numerous specific details are set forth in order to provide a thorough understanding of the subject matter presented herein. But it will be apparent to one of ordinary skill in the art that the subject matter may be practiced without these specific details. In other instances, well-known methods, procedures, components, and circuits have not been described in detail so as not to unnecessarily obscure aspects of the embodiments.

The terminology used in the description of the invention herein is for the purpose of describing particular embodiments only and is not intended to be limiting of the invention. As used in the description of the invention and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, operations, elements, and/or components, but do not preclude the presence or addition of one or more other features, operations, elements, components, and/or groups thereof.

As used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

Although some of the various drawings illustrate a number of logical stages in a particular order, stages that are not order dependent may be reordered and other stages may be combined or broken out. While some reordering or other groupings are specifically mentioned, others will be obvious to those of ordinary skill in the art and so do not present an exhaustive list of alternatives. Moreover, it should be recognized that the stages could be implemented in hardware, firmware, software or any combination thereof.

The foregoing description, for purpose of explanation, has been described with reference to specific embodiments. However, the illustrative discussions above are not intended to be exhaustive or to limit the invention to the precise forms disclosed. Modifications and variations are possible within the scope of the invention as defined by the appended claims.

The embodiments were chosen and described in order to best explain the principles of the invention and its practical applications, to thereby enable others skilled in the art to best utilize the invention and various embodiments with various modifications within the scope of the invention as defined by the appended claims, as are suited to the particular use contemplated.

References

Chen, J. and Hoversten, G.M. [2012], Joint inversion of marine seismic AVA and CSEM data using statistical rock-physics models and Markov random fields: Geophysics, 77 , 1, R65-R80.

Dvorkin, J., and A. Nur, 1996, Elasticity of high-porosity sandstones: Theory for two North Sea data sets: Geophysics, 61, 1363-1370.

Goodfellow, I., Bengio, Y., and Courville, A. [2016] Deep Learning. MIT Press, Cambridge, MA.

Hinton, G.E., and Salakhutdinov, R.R. [2006] Reducing the Dimensionality of Data with Neural Networks. Science, 323, 504 - 507.

Hoversten G.M., Royle, A., Chen, J., Myer, D. [2017] MCMC Inversion of Offshore West Africa AVA Data. 79th EAGE Conference and Exhibition. DOI: 10.3997/2214-4609.201700545.

Isola, P., Zhu, J., Zhou, T., and Efros, A.A. [2017] Image-to-Image Translation with Conditional Adversarial Networks. CVPR 2017.

Li, C., Wand, M. [2016] Precomputed real-time texture synthesis with Markovian generative adversarial networks. In: ECCV

Ronneberger, O., Fischer, P., and Brox, T. [2015] U-net: Convolutional networks for biomedical image segmentation. In MICCAI, volume 9351, pp. 234-241.

Sulistiono, D._ Vaughan, R., Ali, M._ and Rasoulzadeh, S. [2015] Integrating Seismic and Well Data into Highly Detailed Reservoir Model through AVA Geostatistical Inversion. Abu Dhabi International Petroleum Exhibition and Conference 9-12 November 2015, SPE-177963-MS

## Claims

1. A computer-implemented method (100) of generating high-resolution reservoir parameters, comprising:

   a. receiving (A), at one or more processors, a seismic dataset representative of a subsurface volume of interest;
   b. inverting (10), via the one or more processors, the seismic dataset to generate an ensemble of coarse-scale seismic parameters, wherein the inverting may use one of Bayesian models with Markov Chain Monte Carlo, MCMC, sampling, simulated annealing, partial swarm, or analytic Bayes formulations;
   c. receiving, at the one or more processors, fine-scale lithotype models and a corresponding ensemble of coarse-scale models;
   d. developing (12), via the one or more processors, deep learning neural networks based on transfer learning using the fine-scale lithotype models and the corresponding ensemble of coarse-scale models to generate a conditional probability distribution of high-resolution reservoir parameters;
   e. generating (C), via the one or more processors, an ensemble of high-resolution reservoir parameters by applying the conditional probability distribution of high-resolution reservoir parameters to the ensemble of coarse-scale seismic parameters to condition the ensemble of coarse-scale seismic parameters; and
   f. displaying, on a user interface, the ensemble of high-resolution reservoir parameters.

**2.** The method (100) of claim 1 further comprising performing (14), via the one or more processors, flow simulation for each image in the ensemble of high-resolution reservoir parameters to generate an ensemble of flow simulation results (D).

**3.** The method (100) of claim 2 further comprising receiving flow-related data at the one or more processors and comparing (F) the flow-related data to the ensemble of flow simulation results (D).

**4.** The method (100) of claim 3 further comprising using some criteria to select those models from the ensemble of flow simulation results that fit the flow-related data within a set variance.

**5.** A computer system (500), comprising:

one or more processors (502); and
memory (506);
wherein one or more programs are stored in the memory (506) and configured to be executed by the one or more processors (502), the one or more programs including instructions that when executed by the one or more processors (502) cause the computer system (500) to execute the method of any of claims 1 to 4.

**6.** One or more programs comprising instructions which, when executed by an electronic device (500) with one or more processors (502) and memory (506), cause the device (500) to execute the method of any of claims 1 to 4.

**7.** A non-transitory computer readable storage medium (506) storing the one or more programs of claim 6.

**Patentansprüche**

**1.** Computerimplementiertes Verfahren (100) zum Generieren von hochauflösenden Reservoirparametern, umfassend:

a. Empfangen (A), an einem oder mehreren Prozessoren, eines Seismikdatensatzes, der ein Untergrundvolumen von Interesse repräsentiert;
b. Invertieren (10), über den einen oder die mehreren Prozessoren, des seismischen Datensatzes, ein Ensemble von grobmaßstäbigen seismischen Parametern zu generieren, wobei bei dem Invertieren eines von Bayesschen Modellen mit Markov-Chain-Monte-Carlo- bzw. MCMC-Sampling, Simulated Annealing, Partial Swarm oder analytische Bayes-Formulierungen verwendet werden kann;
c. Empfangen, an dem einen oder den mehreren Prozessoren, von feinmaßstäbigen Lithotyp-Modellen und eines entsprechenden Ensembles von grobmaßstäbigen Modellen;
d. Entwickeln (12), über den einen oder die mehreren Prozessoren, von neuronalen Deep-Learning-Netzen basierend auf Transferlernen unter Verwendung der feinmaßstäbigen Lithotyp-Modelle und des entsprechenden Ensembles von grobmaßstäbigen Modellen, um eine bedingte Wahrscheinlichkeitsverteilung von hochauflösenden Reservoirparametern zu generieren;
e. Generieren (C), über den einen oder die mehreren Prozessoren, eines Ensembles von hochauflösenden Reservoirparametern durch Anwenden der bedingten Wahrscheinlichkeitsverteilung von hochauflösenden Reservoirparametern auf das Ensemble von grobmaßstäbigen seismischen Parametern, um das Ensemble von grobmaßstäbigen seismischen Parametern zu konditionieren; und
f. Anzeigen, auf einer Benutzeroberfläche, des Ensembles von hochauflösenden Reservoirparametern.

**2.** Verfahren (100) nach Anspruch 1, ferner umfassend Durchführen (14), über den einen oder die mehreren Prozessoren, einer Strömungssimulation für jedes Bild in dem Ensemble von hochauflösenden Reservoirparametern, um ein Ensemble von Strömungssimulationsergebnissen (D) zu generieren.

**3.** Verfahren (100) nach Anspruch 2, ferner umfassend Empfangen von strömungsbezogenen Daten an dem einen oder den mehreren Prozessoren und Vergleichen (F) der strömungsbezogenen Daten mit dem Ensemble von Strömungssimulationsergebnissen (D).

**4.** Verfahren (100) nach Anspruch 3, ferner umfassend Verwenden einiger Kriterien, um jene Modelle aus dem Ensemble von Strömungssimulationsergebnissen auszuwählen, die innerhalb einer vorgegebenen Varianz mit den strömungsbezogenen Daten übereinstimmen.

**5.** Computersystem (500), das Folgendes umfasst:

einen oder mehrere Prozessoren (502); und
einen Speicher (506);
wobei ein oder mehrere Programme in dem Speicher (506) gespeichert sind und dazu ausgelegt sind, durch den einen oder die mehreren Prozessoren (502) ausgeführt zu werden, wobei das eine oder die mehreren Programme Anweisungen enthalten, die bei Ausführung durch den einen oder die mehreren Prozessoren (502) bewirken, dass das Computersystem (500) das Verfahren nach einem der Ansprüche 1 bis 4 ausführt.

**6.** Programm oder Programme, umfassend Anweisungen, die bei Ausführung durch eine elektronische Vorrichtung (500) mit einem oder mehreren Prozessoren (502) und einem Speicher (506) bewirken, dass die Vorrichtung (500) das Verfahren nach einem der Ansprüche 1 bis 4 ausführt.

**7.** Nicht-flüchtiges computerlesbares Speichermedium (506), das das eine oder die mehreren Programme nach Anspruch 6 speichert.


## Revendications

**1.** Procédé mis en oeuvre par ordinateur (100) de génération de paramètres de réservoir haute résolution, comprenant :

a. la réception (A), au niveau d'un ou de plusieurs processeurs, d'un ensemble de données sismiques représentatives d'un volume d'intérêt en sous-surface ;
b. l'inversion (10), via les un ou plusieurs processeurs, de l'ensemble de données sismiques pour générer un ensemble de paramètres sismiques à échelle grossière, dans lequel l'inversion peut utiliser l'un de modèles bayésiens avec un échantillonnage de Monte-Carlo par chaînes de Markov, soit MCMC, un recuit simulé, un essaim partiel ou des formulations bayésiennes analytiques ;
c. la réception, au niveau des un ou plusieurs processeurs, de modèles lithotypiques à échelle fine et d'un ensemble correspondant de modèles à échelle grossière ;
d. le développement (12), via les un ou plusieurs processeurs, de réseaux neuronaux à apprentissage profond sur la base d'un apprentissage par transfert utilisant les modèles lithotypiques à échelle fine et l'ensemble correspondant de modèles à échelle grossière pour générer une distribution de probabilités conditionnelles de paramètres de réservoir haute résolution ;
e. la génération (C), via les un ou plusieurs processeurs, d'un ensemble de paramètres de réservoir haute résolution en appliquant la distribution de probabilités conditionnelles de paramètres de réservoir haute résolution à l'ensemble de paramètres sismiques à échelle grossière pour conditionner l'ensemble de paramètres sismiques à échelle grossière ; et
f. l'affichage, sur une interface utilisateur, de l'ensemble de paramètres de réservoir haute résolution.

**2.** Procédé (100) selon la revendication 1, comprenant en outre la réalisation (14), via les un ou plusieurs processeurs, d'une simulation de flux pour chaque image dans l'ensemble de paramètres de réservoir haute résolution pour générer un ensemble de résultats de simulation de flux (D).

**3.** Procédé (100) selon la revendication 2, comprenant en outre la réception de données rapportées au flux au niveau des un ou plusieurs processeurs et la comparaison (F) des données rapportées au flux avec l'ensemble de résultats de simulation de flux (D).

**4.** Procédé (100) selon la revendication 3, comprenant en outre l'utilisation de certains critères pour sélectionner les modèles parmi l'ensemble de résultats de simulation de flux qui ajustent les données rapportées au flux à l'intérieur d'une variance définie.

**5.** Système informatique (500), comprenant :

un ou plusieurs processeurs (502) ; et
une mémoire (506),
dans lequel un ou plusieurs programmes est/sont stocké(s) dans la mémoire (506) et configuré(s) pour être exécuté(s) par les un ou plusieurs processeurs (502), les un ou plusieurs programmes incluant des instructions qui, lorsqu'elles sont exécutées par les un ou plusieurs processeurs (502), forcent le système informatique (500) à exécuter le procédé selon l'une quelconque des revendications 1 à 4.

6. Un ou plusieurs programmes comprenant des instructions qui, lorsqu'elles sont exécutées par un dispositif électronique (500) muni d'un ou de plusieurs processeurs (502) et d'une mémoire (506), forcent le dispositif (500) à exécuter le procédé selon l'une quelconque des revendications 1 à 4.

7. Support de stockage lisible par ordinateur non transitoire (506) stockant les un ou plusieurs programmes selon la revendication 6.

High-resolution reservoir imaging needs to combine seismic data and other sources of information

Geologic, EM, or other types of information

3D Seismic Convolutional or Elastic Data

Reservoir Simulation

0.1~2 m          20 ~ 100 m          Greater than 100 m

Spatial Resolution

FIG. 1

# Workflow for combining seismic and flow data

FIG. 2

FIG. 3

# Conditional generative adversarial networks (c-GANs)

Coarse-scale Seismic Inversion results ($\theta_c$)

*The goal is to learn a deep network that generates fine-scale k-fields that are close to the real data.*

Random vector Z

Generator Deep neural networks G($\theta$,z)

Generated fine-scale fake permeability data

Discriminator Deep neural networks D($\theta$, k)

Prob(k)

Real fine-scale permeability data

FIG. 4

EP 3 908 860 B1

FIG. 5

Comparison between inverted and true Zp at each CDP (black-true)

FIG. 6

Comparison between inverted and Vp/Vs ratio at each CDP (black-true)

FIG. 7

# Selected estimated k-fields using c-GAN

FIG. 8

FIG. 9

# Best model based on seismic and Pressure data

True fine-scale model

(a) True fine-scale K

Estimated fine-scale model

(b) Estimated fine-scale K

FIG. 10

**500**

Memory **506**

| Operating System | 516 |
| Network Communication Module | 518 |

High-res Model Module — 520

CPU(s) **502**

504

Bayesian Sub-module — 522
  Set of instructions — 522-1
  Metadata & Parameters — 522-2

Deep Learning Sub-module — 523
  Set of instructions — 523-1
  Metadata & Parameters — 523-2

Network Interface **508**

Communication Interface(s) **503**

Flow Simulation Sub-module — 524
  Set of instructions — 524-1
  Metadata & Parameters — 524-2

User Interface **505**
  Display **505-1**
  Input Device **505-2**

Data Sub-module — 525
  SEISMIC DATA — 525-1
  ⋮
  PRODUCTION DATA — 525-N

FIG. 11

EP 3 908 860 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008162100 A1

**Non-patent literature cited in the description**

- **DENNY SULISTIONO et al.** *SPE-177963-MS Integrating Seismic and Well Data into Highly Detailed Reservoir Model through AVA Geostatistical Inversion,* 01 November 2015, 1-15
- **WALKER et al.** Varying prior information in Bayesian inversion. *INVERSE PROBLEMS,* 19 May 2014, vol. 30, 065002
- **SACRAMENTO et al.** Combined Convolutional Neural Network for High Frequency Restoration in Acoustic Impedance Images. *International Joint Conference on Neural Networks (IJCNN),* 01 July 2018, 1-8
- **CHEN, J. ; HOVERSTEN, G.M.** Joint inversion of marine seismic AVA and CSEM data using statistical rock-physics models and Markov random fields. *Geophysics,* 2012, vol. 77 (1), R65-R80
- **DVORKIN, J ; A. NUR.** Elasticity of high-porosity sandstones: Theory for two North Sea data sets. *Geophysics,* 1996, vol. 61, 1363-1370
- **GOODFELLOW, I ; BENGIO, Y. ; COURVILLE, A.** Deep Learning. MIT Press, 2016
- **HINTON, G.E ; SALAKHUTDINOV, R.R.** Reducing the Dimensionality of Data with Neural Networks. *Science,* 2006, vol. 323, 504-507
- **HOVERSTEN G.M. ; ROYLE, A ; CHEN, J. ; MYER, D.** MCMC Inversion of Offshore West Africa AVA Data. *79th EAGE Conference and Exhibition.,* 2017
- **ISOLA, P. ; ZHU, J. ; ZHOU, T. ; EFROS, A.A.** Image-to-Image Translation with Conditional Adversarial Networks. *CVPR,* 2017
- **LI, C ; WAND, M.** Precomputed real-time texture synthesis with Markovian generative adversarial networks. *ECCV,* 2016
- **RONNEBERGER, O ; FISCHER, P ; BROX, T.** U-net: Convolutional networks for biomedical image segmentation. *In MICCAI,* 2015, vol. 9351, 234-241
- **SULISTIONO, D ; VAUGHAN, R ; ALI, M ; RASOULZADEH, S.** Integrating Seismic and Well Data into Highly Detailed Reservoir Model through AVA Geostatistical Inversion. *Abu Dhabi International Petroleum Exhibition and Conference,* 2015